# EUROPEAN PATENT SPECIFICATION

(11) **EP 4 399 674 B1**
(45) Date of publication and mention of the grant of the patent: **21.05.2025**
(21) Application number: 21814735.3
(22) Date of filing: 15.11.2021
(51) Int. Cl.: G06T 5/50, G06T 5/60, H04N 23/60, H04N 23/741, H04N 23/743

(54) **HIGH DYNAMIC RANGE IMAGING DEVICE AND METHOD OF GENERATING A HIGH DYNAMIC RANGE IMAGE**
BILDERZEUGUNGSVORRICHTUNG MIT HOHEM DYNAMIKBEREICH UND VERFAHREN ZUR ERZEUGUNG EINES BILDES MIT HOHEM DYNAMIKBEREICH
DISPOSITIF D'IMAGERIE À GAMME DYNAMIQUE ÉLEVÉE ET PROCÉDÉ DE GÉNÉRATION D'UNE IMAGE À GAMME DYNAMIQUE ÉLEVÉE

(43) Date of publication of application: 17.07.2024
(73) Proprietor: Huawei Technologies Co., Ltd., Shenzhen, Guangdong 518129 (CN); University of Zurich, 8006 Zurich (CH)
(72) Inventor: GEORGOULIS, Stamatios, 80992 Munich (DE); MESSIKOMMER, Nico, 8006 Zurich (CH); TULYAKOV, Stepan, 80992 Munich (DE); ERBACH, Julius, 80992 Munich (DE); BOCCHICCHIO, Alfredo, 80992 Munich (DE); GEHRIG, Daniel, 8006 Zurich (CH); LI, Yuanyou, 80992 Munich (DE); SCARAMUZZA, Davide, 8006 Zurich (CH)
(74) Representative: Körber, Martin Hans
(86) International application number: PCT/EP2021/081609
(87) International publication number: WO 2023/083466

(56) References cited:
- CN-A- 111 563 559
- REBECQ HENRI ET AL: "High Speed and High Dynamic Range Video with an Event Camera", IEEE TRANSACTIONS ON PATTERN ANALYSIS AND MACHINE INTELLIGENCE, IEEE COMPUTER SOCIETY, USA, vol. 43, no. 6, 31 December 2019 (2019-12-31), pages 1964 - 1980, XP011854071, ISSN: 0162-8828, [retrieved on 20210510], DOI: 10.1109/TPAMI.2019.2963386
- WANG LIN ET AL: "Event-Based High Dynamic Range Image and Very High Frame Rate Video Generation Using Conditional Generative Adversarial Networks", 2019 IEEE/CVF CONFERENCE ON COMPUTER VISION AND PATTERN RECOGNITION (CVPR), IEEE, 15 June 2019 (2019-06-15), pages 10073 - 10082, XP033687410, DOI: 10.1109/CVPR.2019.01032
- ZOU YUNHAO ET AL: "Learning to Reconstruct High Speed and High Dynamic Range Videos from Events", 2021 IEEE/CVF CONFERENCE ON COMPUTER VISION AND PATTERN RECOGNITION (CVPR), IEEE, 20 June 2021 (2021-06-20), pages 2024 - 2033, XP034007167, DOI: 10.1109/CVPR46437.2021.00206
- LIN WANG ET AL: "Deep Learning for HDR Imaging: State-of-the-Art and Future Trends", ARXIV.ORG, CORNELL UNIVERSITY LIBRARY, 201 OLIN LIBRARY CORNELL UNIVERSITY ITHACA, NY 14853, 2 November 2021 (2021-11-02), XP091092740

## Description

### TECHNICAL FIELD

The present disclosure relates generally to high dynamic range (HDR) imaging; and more specifically to event-assisted high dynamic range (HDR) imaging device.

### BACKGROUND

Conventionally, dynamic range of real world is very large, usually more than five orders of magnitude. Consequently, the dynamic range of everyday scenes can hardly be recorded by a conventional sensor. Therefore, some portions of the picture can be over-exposed or under-exposed. In recent years, high dynamic range (HDR) imaging techniques make it possible to reconstruct the radiance map that covers the full dynamic range by combining multiple exposures of the same scene (exposure bracketing). Moreover, these techniques usually estimate the camera response function, and then further estimate the radiance of each pixel.

Notably, current HDR solutions can be classified into single-exposure and multi-exposure methods that only rely on standard image sensors; event-based methods that only use event sensor; and hybrid methods that utilize both. Firstly, single-exposure methods infer an HDR image or stack of differently exposed LDR images from a single LDR image and can therefore be applied to legacy LDR content. However, they still essentially hallucinate details in saturated regions from the surrounding non-saturated context, and, thus, are not suitable for commercial applications. Secondly, a simple solution to the alignment problem is to reject moving object pixels or use robust exposure fusion. However, these methods often fail to identify moving objects, and are unable to reconstruct them in HDR. Notably, event-based methods reconstruct intensity frames from events using deep learning. Additionally, these methods do not explicitly target HDR imaging, but they rather reconstruct HDR-like images as a consequence of using events. However, reconstruction of an image from its spatial gradients is an ill-posed problem, especially when considering the instability of the contrast threshold. Therefore, event-based methods often produce images with incorrect global contrast. Another solution is the use of hybrid HDR method that combines an LDR image captured by a high-resolution frame camera with events acquired by an auxiliary event camera. However, they still rely on the chrominance of the LDR image when it comes to color, as most event cameras currently do not provide color information.

Therefore, in light of the foregoing discussion, there exists a need to overcome the aforementioned drawbacks associated with the conventional methods of HDR imaging.

CN 111 563 559 A discloses an imaging for fusing diverse information for a scene at the same time. The method comprises the steps of acquiring visible light information collected by a visible light sensor, infrared radiation information collected by an infrared sensor and event flow collected by an event sensor at the same time in the same scene; determining first internal and external parameter information between the visible light sensor and the infrared sensor and second internal and external parameter information between the visible light sensor and the event sensor; and fusing any two or three of the visible light information, the infrared radiation information and the event flow according to the first internal and external parameter information and the second internal and external parameter information to generate target image information.

Rebecq et al.: "High Speed and High Dynamic Range Video with an Event Camera", IEEE Transaction on Pattern Analysis and Machine Intelligence, IEEE Comp. Soc., USA, vol. 43, no. 6, 31 December 2019, pages 1964-1980 discloses the reconstruction of intensity images from event streams directly from data instead of relying on any hand-crafted priors. To this end, a novel recurrent network is proposed to reconstruct videos from a stream of events, and train it on a large amount of simulated event data. During training a perceptual loss is used to encourage reconstructions to follow natural image statistics.

Wang Lin et al.: "Event-Based High Dynamic Range Image and Very High Frame Rate Video Generation Using Conditional Generative Adversarial Networks", 2019 IEEE/CVF Conference on Computer Vision and Pattern Recognition (CVPR), IEEE, 15 June 2019, pages 10073-10082 discloses the creation of images/videos from an adjustable portion of an event data stream. The stacks of space-time coordinates of events are used as inputs and the network is trained to reproduce images based on the spatio-temporal intensity changes.

Zou Yunhao et al.: "Learning to Reconstruct High Speed and High Dynamic Range Videos from Events", 2021 IEEE/CVF Conference on Computer Vision and Pattern Recognition (CVPR), IEEE, 20 June 2021, pages 2024-2033, XP034007167 discloses a convolutional recurrent neural network which takes a sequence of neighboring events to reconstruct high speed HDR videos.

### SUMMARY

The present disclosure seeks to provide a high dynamic range, HDR, imaging device. The present disclosure seeks to provide a solution to the existing problem regarding alignment of low dynamic range (LDR) images, for example, brightness constancy needed for optical flow estimation, saturation, blur, and noise. An aim of the present disclosure is to provide a solution that overcomes at least partially the problems encountered in prior art, and provides an improved HDR imaging device.

The object of the present disclosure is achieved by the solutions provided in the enclosed independent claims. Advantageous implementations of the present disclosure are further defined in the dependent claims.

In one aspect, the present disclosure provides a high dynamic range, HDR, imaging device comprising: an image sensor configured to capture a plurality of low dynamic range, LDR, images; an aligned event sensor with pixels configured to capture a plurality of events between the plurality of LDR images, wherein each pixel is configured to trigger an event when a change of intensity of the pixel crosses a threshold; an image encoder module configured to generate an image feature representation based on each of the LDR images; an event encoder module configured to generate an event feature representation based on a subset of the plurality of events associated with each of the LDR images; a feature alignment module configured to: estimate per-pixel offsets between the image feature representation of a specified LDR image and the image feature representations of each other LDR image, based on the image and event feature representations of each LDR image, and generate a plurality of aligned feature representations by applying deformable convolutions or feature warping to the image feature representations of each other LDR image based on the estimated offsets; a fusion module configured to generate a fused feature representation where each pixel is selected from one or more of the plurality of aligned feature representations locally or non-locally; and an image decoder module configured to generate a HDR image based on the fused feature representation.

Beneficially, such an arrangement can recover structure and color from actual measurements in the saturated parts of the LDR image without hallucination. Additionally, it is capable of estimating true (camera and scene) motion by combining information from images and events, making it more robust to ghosting artifacts and blurriness. Moreover, HDR RGB images of high quality and high spatial resolution are produced, since the arrangement combines the event sensor with a high-quality RGB camera that captures a burst of bracketed exposures. Furthermore, the present disclosure combines motion information from both images and events, and perform pyramid, iterative, and deformable convolution alignment at the feature level.

In an implementation form, the image sensor is configured to generate a burst of three LDR images including a mid-exposed LDR image followed by a short-exposed LDR image followed by a long-exposed LDR image, wherein the specified LDR image is the mid- exposed LDR image.

Beneficially, this enables to reveal the details of an image in the darkest of shadows that requires high exposures, while preserving detail in very bright situations that requires very low exposures.

In an implementation form, the image sensor and aligned event sensor are aligned with beam splitter, or wherein the image sensor and aligned event sensor are integrated in a hybrid sensor.

Beneficially, such an arrangement helps to perform pyramid, iterative, and deformable convolution alignment at the feature level. Additionally, the present disclosure aligned with the beam splitter or integrated in a hybrid sensor are temporarily synchronized and optically aligned, including focus and field of view.

In an implementation form, a pre-processing module configured to de-noise and/or de-blur each LDR image based on the associated subset of the plurality of events.

Beneficially, de-blurring of the LDR image is a recovering process that recovers a sharp latent LDR image from a blurred LDR image.

In an implementation form, the image encoder module and event encoder module generate feature representations at a plurality of scales.

Beneficially, this enables the early layers to learn low-scale spatial features like texture, edges, or boundaries etc. while the deep layers learn high-scale semantic features which are close to the provided labels.

In an implementation form, the image encoder module and event encoder module generate feature representations at three scales.

Beneficially, the high-scale, mid-scale and low-scale semantic features help in locating the camera or scale motion accurately. Additionally, they also provide the spatial context information around the camera or scale motion.

In an implementation form, the event encoder module includes a convolutional LSTM module for each scale, each configured to integrate the event feature representations between the specified LDR image and each other LDR image.

Beneficially, at the end of the pyramid event encoder module there are convolutional LSTM modules, one for each scale, that integrate the per-scale event feature representations between the time frames, which is required to align low and high exposure LDR images to the mid exposure LDR image. Additionally, combining the advantages of convolutional neural networks (CNN) that can extract effective features from the data, and long short-term memory (LSTM) which can detect long range dependencies across time that are associated with the camera or scene motion.

In an implementation form, the feature alignment module first estimates offsets and generates aligned feature representations for the smallest scale, and is configured to estimate the offsets for each subsequent scale based at least in part on the offsets for the preceding scale.

Beneficially, estimating the offsets for different scales in this way can ensure alignment is performed in a coarse-to-fine manner, and increase the receptive field of the network in cases of larger motions.

In an implementation form, the feature alignment module is configured to estimate the offsets using a lookup network configured to extract a plurality of per-pixel features, build multi-scale 4D correlation volumes for all pairs of pixels, and iteratively perform a lookup on the correlation volumes to update a flow field with values for the offsets.

Beneficially, the correlation volumes help establish feature correlations across the entirety of the image, thus allowing for compensation of larger motions.

In an implementation form, the image encoder module and event encoder module are pyramid encoder modules each including 1 to 5 residual blocks.

Beneficially, residual blocks allow memory (or information) to flow from initial to last layers. Additionally, the residual blocks create an identity mapping to activations earlier in the network to thwart the performance degradation problem associated with deep neural architectures. Furthermore, this helps in tackling the vanishing gradient problem using identity mapping.

In an implementation form, the feature alignment module is configured to apply the feature-level deformation or warping in a coarse to fine manner.

Beneficially, such an arrangement works on different scales and produces a series of warping fields, capturing flow on different scales from coarse to fine. Additionally, this enables efficient inference possible while minimizing loss of accuracy. Furthermore, a coarse-to-fine approach performs inference at successively finer level. It uses the results from the coarser stages, where inference is faster, to guide and speed up inference at the more refined levels.

In an implementation form, the feature alignment module is supervised by generating auxiliary reconstructions at a plurality of scales and comparing the auxiliary reconstruction for each scale with a ground truth HDR image.

Beneficially, this allows for deep supervision of the deformable alignment of each LDR image, ensuring that the proper offsets will be learned of each LDR image.

In an implementation form, the image decoder module includes 5 to 10 residual blocks.

Beneficially, residual blocks allow memory (or information) to flow from initial to last layers. Additionally, the residual blocks create an identity mapping to activations earlier in the network to thwart the performance degradation problem associated with deep neural architectures. Furthermore, this helps in tackling the vanishing gradient problem using identity mapping.

In an implementation form, the image decoder module includes a skip connection of the image feature representation of the specified LDR image from the image encoder module.

Beneficially, the skip connection ensures alignment with the specified LDR image, that is the mid-exposed LDR image, and pushes the network to only learn the missing information that needs to be filled from the other LDR images, that is short- and long-exposed LDR images.

In one aspect, the present disclosure provides a method of generating a high dynamic range, HDR, image, comprising: capturing, using an image sensor, a plurality of low dynamic range, LDR, images; capturing, using an aligned event sensor, a plurality of events between the plurality of LDR images, by triggering an event from each pixel of the aligned event sensor when a change of intensity of the pixel crosses a threshold; generating, using an image encoder module, an image feature representation based on each of the LDR images; generating, using an event encoder module, an event feature representation based on a subset of the plurality of events associated with each of the LDR images; estimating, using a feature alignment module, per-pixel offsets between the image feature representation of a specified LDR image and the image feature representations of each other LDR image, based on the image and event feature representations of each LDR image; generating, using the feature alignment module, a plurality of aligned feature representations by applying deformable convolutions or feature warping to the image feature representations of each other LDR image based on the estimated offsets; generating, using a fusion module, a fused feature representation where each pixel is selected from one or more of the plurality of aligned feature representations locally or non-locally; and generate, using an image decoder module, a HDR image based on the fused feature representation.

Beneficially, such an arrangement can recover structure and color from actual measurements in the saturated parts of the LDR image without hallucinating it. Additionally, it is capable of estimating true (camera and scene) motion by combining information from images and events, making it more robust to ghosting artifacts and blurriness. Moreover, HDR RGB images of high quality and high spatial resolution are produced, since the arrangement combines the event sensor with a high-quality RGB camera that captures a burst of bracketed exposures. Furthermore, the present disclosure combines motion information from both images and events, and perform pyramid, iterative, and deformable convolution alignment at the feature level.

In an implementation form, the method further comprises the image sensor configured to generate a burst of three LDR images including a mid-exposed LDR image followed by a short-exposed LDR image followed by a long-exposed LDR image, wherein the specified LDR image is the mid exposed LDR image.

Beneficially, this enables to reveal the details of an image in the darkest of shadows that requires high exposures, while preserving detail in very bright situations that requires very low exposures.

In an implementation form, the method further comprises the image sensor and aligned event sensor aligned with beam splitter, or wherein the image sensor and aligned event sensor are integrated in a hybrid sensor.

Beneficially, such an arrangement helps to perform pyramid, iterative, and deformable convolution alignment at the feature level. Additionally, the present disclosure aligned with the beam splitter or integrated in a hybrid sensor are temporarily synchronized and optically aligned, including focus and field of view.

In an implementation form, the method further comprises a pre-processing module configured to de-noise and/or de-blur each LDR image based on the associated subset of the plurality of events.

Beneficially, de-blurring of the LDR image is a recovering process that recovers a sharp latent LDR image from a blurred LDR image.

In an implementation form, the method further comprises the image encoder module and event encoder module to generate feature representations at a plurality of scales.

Beneficially, this enables the early layers to learn low-scale spatial features like texture, edges, or boundaries etc. while the deep layers learn high-scale semantic features which are close to the provided labels.

In an implementation form, the method further comprises the image encoder module and event encoder module to generate feature representations at three scales.

Beneficially, the high-scale, mid-scale and low scale semantic features help in locating the camera or scene motion accurately. Additionally, they also provide the spatial context information around the camera or scene motion.

In an implementation form, the method further comprises the event encoder module to include a convolutional LSTM module for each scale, each configured to integrate the event feature representations between the specified LDR image and each other LDR image.

Beneficially, at the end of the pyramid event encoder module there are convolutional LSTM modules, one for each scale, that integrate the per-scale event feature representations between the time frames, which is required to align low and high exposure LDR images to the mid exposure LDR image. Additionally, combining the advantages of convolutional neural networks (CNN) that can extract effective features from the data, and long short-term memory (LSTM) which can detect long range dependencies across time that are associated with the camera or scene motion.

In an implementation form, the method further comprises the feature alignment module to first estimates offsets and generates aligned feature representations for the smallest scale and is configured to estimate the offsets for each subsequent scale based at least in part on the offsets for the preceding scale.

Beneficially, estimating the offsets for different scales in this way can ensure alignment is performed in a coarse-to-fine manner, and increase the receptive field of the network in cases of larger motions.

In an implementation form, the method further comprises the feature alignment module configured to estimate the off-sets using a lookup network configured to extract a plurality of per-pixel features, build multi-scale 4D correlation volumes for all pairs of pixels, and iteratively perform a lookup on the correlation volumes to update a flow field with values for the offsets.

Beneficially, the correlation volumes help establish feature correlations across the entirety of the image, thus allowing for compensation of larger motions.

In an implementation form, the method further comprises wherein the image encoder module and event encoder module are pyramid encoder modules each including 1 to 5 residual blocks.

Beneficially, residual blocks allow memory (or information) to flow from initial to last layers. Additionally, the residual blocks create an identity mapping to activations earlier in the network to thwart the performance degradation problem associated with deep neural architectures. Furthermore, this helps in tackling the vanishing gradient problem using identity mapping.

In an implementation form, the method further comprises wherein the feature alignment module is configured to apply the feature-level deformation or warping in a coarse to fine manner.

Beneficially, such an arrangement works on different scales and produces a series of warping fields, capturing flow on different scales from coarse to fine. Additionally, this enables efficient inference possible while minimizing loss of accuracy. Furthermore, a coarse-to-fine approach performs inference at successively finer level. It uses the results from the coarser stages, where inference is faster, to guide and speed up inference at the more refined levels.

In an implementation form, the method further comprises wherein the feature alignment module is supervised by generating auxiliary reconstructions at a plurality of scales and comparing the auxiliary reconstruction for each scale with a ground truth HDR image.

Beneficially, this allows for deep supervision of the deformable alignment of each LDR image, ensuring that the proper offsets will be learned of each LDR image.

In an implementation form, the method further comprises wherein the image decoder module includes 5 to 10 residual blocks.

Beneficially, residual blocks allow memory (or information) to flow from initial to last layers. Additionally, the residual blocks create an identity mapping to activations earlier in the network to thwart the performance degradation problem associated with deep neural architectures. Furthermore, this helps in tackling the vanishing gradient problem using identity mapping.

In an implementation form, the method further comprises wherein the image decoder module includes a skip connection of the image feature representation of the specified LDR image from the image encoder module.

Beneficially, the skip connection ensures alignment with the specified LDR image, that is the mid-exposed LDR image, and pushes the network to only learn the missing information that needs to be filled from the other LDR images, that is short- and long-exposed LDR images.

In one aspect, the present disclosure provides a computer-readable medium comprising instructions which, when executed by a processor, cause the processor to perform the method of any one of claims 15 to 28.

Beneficially, the method of present disclosure may be performed using a processor. Additionally, the processor may include one or more individual processors, processing devices and elements arranged in various architectures for responding to and processing the instructions that drive the system.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A is a block diagram of a high dynamic range, HDR, imaging device, in accordance with an embodiment of the present disclosure;
FIG. 1B is a schematic illustration depicting configuration of an HDR image, in accordance with an embodiment of the present disclosure;
FIG. 2A is a block diagram of a feature alignment module, in accordance with an embodiment of the present disclosure;
FIG. 2B is a block diagram of architecture of the low lookup network, in accordance with an embodiment of the present disclosure;
FIG. 3 an operation of generating HDR image, in accordance with an exemplary embodiment of the present disclosure; and
FIGs. 4A & 4B are flowchart depicting steps of a method for generating a high dynamic range image, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

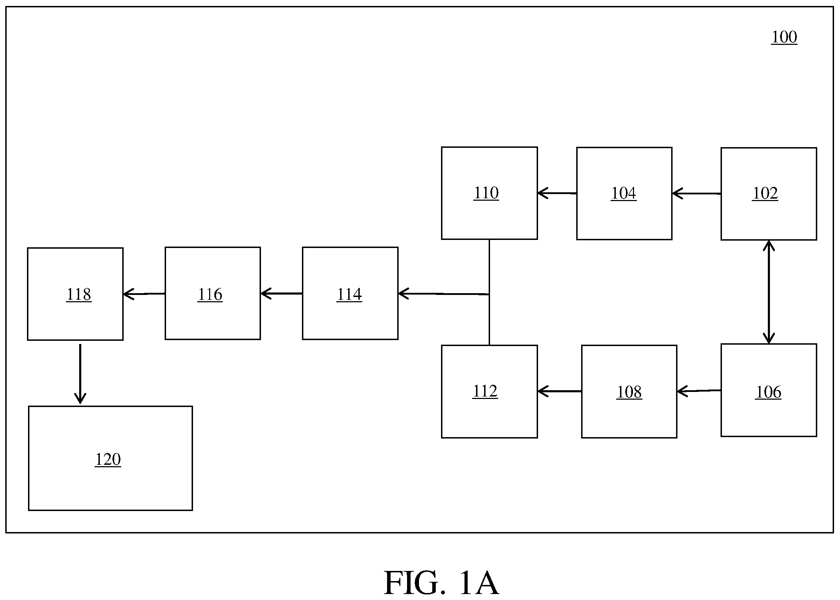

FIG. 1A is a block diagram of a high dynamic range, HDR, imaging device, in accordance with an embodiment of the present disclosure. With reference to FIG. 1A, there is shown an HDR imaging device **100**. The HDR imaging device **100** comprises an image sensor **102** to capture a plurality of low dynamic range, LDR, images **104**. Furthermore, an aligned event sensor **106** is configured to capture a plurality of events **108** between the plurality of LDR images **104**. Additionally, an image encoder module **110** is configured to generate an image feature representation based on each of the plurality of the LDR images **104**. Moreover, an event encoder module **112** is configured to generate event feature representation based on a subset of the plurality of events **108**. A feature alignment module **114** is configured to estimate and generate a plurality of aligned feature representations. A fusion module **116** is configured to generate a fused feature representation. An image decoder module **118** is configured to generate a HDR image **120**.

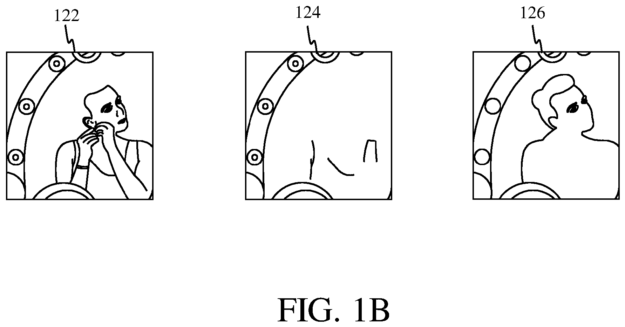

FIG. 1B is a schematic illustration depicting configuration of an HDR image, in accordance with an embodiment of the present disclosure. Fig. 1B is in conjunction with FIG. 1A. With reference to FIG. 1B, there is shown an HDR image **120**. The HDR image **120** comprises three LDR images including a mid-exposed LDR image **122**, followed by a short-exposed LDR image **124**, further followed by a long-exposed LDR image **126**.

The HDR imaging device **100** uses HDR imaging, wherein HDR imaging is a set of techniques used to reproduce a greater range of luminosity than that which is possible with standard photographic techniques. Herein, the term "*dynamic range*" refers to the ratio between maximum and minimum of tonal value in an HDR image **120**. Furthermore, the HDR imaging device **100** may be a camera, a smartphone, television sets, personal digital assistants and so forth.

The image sensor **102** is configured to capture the plurality of LDR images **104**. Herein, an image sensor **102** detects and conveys information by acquiring the plurality of LDR images **104** under different exposures and fuse them to produce the HDR image **120**. Typically, the image sensor **102** converts incoming light into an electrical signal that can be viewed, analyzed and stored. Herein, the image sensor **102** is used in electronic HDR imaging device **100** of both analog and digital types, such as for example, but not limited to, digital cameras, camera modules, camera phones, optical mouse devices, medical imaging equipment. Furthermore, the image sensor **102** are of two main types i.e., charge-coupled device (CCD) and active-pixel sensor which is a complementary metal-oxide-semiconductor (CMOS) sensor. Herein, the image sensor **102** used is an RGB sensor that helps the HDR imaging device **100** analyze a scene being captured and determines amount of light needed to produce a well-exposed HDR image **120**. Typically, the HDR image **120** stores real-scene luminance information corresponding to ability of human visual system to see simultaneously in a particular scene. In this sense, since the HDR image **120** hold true color and dynamic range information of the original scene, their processing, manipulation, representation, and other operations will no longer be limited to the number of bits used to describe each pixel. Typically, the image sensor **102** captures the plurality of LDR images **104** and gathers data on brightness of the plurality of LDR images **104**, then optimizes exposure by adjusting shutter speed, aperture and ISO sensitivity accordingly. Additionally, an image with the dynamic range lower than 255:1 is considered to be the LDR image.

In accordance with an embodiment, the image sensor **102** is configured to generate a burst of three LDR images including a mid-exposed LDR image **122** followed by a short-exposed LDR image **124** followed by a long-exposed LDR image **126**, wherein the specified LDR image is the mid exposed LDR image **122**. Herein, the image sensor **104** captures a burst of bracketed LDR images at consecutive time corresponding to mid exposure time, low exposure time and high exposure time. Particularly, bracketing is a technique wherein the plurality of LDR images **104** are taken more than once using different settings for different exposures, wherein exposure is amount of light per unit area reaching a frame of photographic film or surface of the image sensor **102**, as determined by shutter speed, lens aperture and scene luminance. Furthermore, the three LDR images are captured by a handheld camera, wherein the handheld camera is an RGB camera that comprises a significant camera motion among the mid-exposed LDR image **122**, the short-exposed LDR image **124** and the long-exposed LDR image **126**. Herein, the RGB camera collects visible light and coverts it to an electrical signal, then organizes that information to render images and video streams. Furthermore, the RGB camera is designed to create images that replicate human vision, capturing light in red, green and blue wavelengths for accurate color representation.

The aligned event sensor **106** with pixels configured to capture a plurality of events **108** between the plurality of LDR images **104**, wherein each pixel is configured to trigger an event when a change of intensity of the pixel crosses a threshold. Herein, the aligned event sensor **106** with pixels independently respond to changes in intensity, such as brightness as they occur. Typically, each pixel stores a reference intensity level, and continuously compares it to a current level of intensity. Subsequently, in case change of intensity crosses the threshold, that pixel resets to the reference intensity level and triggers an event. Herein, the plurality of events **108** is a stream of asynchronous events, wherein each single event comprises triggering time of the event, spatial position of the event, and polarity i.e., positive polarity or negative polarity. Furthermore, data from the plurality of events **108** and the plurality of LDR images **104** are temporally synchronized and spatially aligned and comprises a resolution as though they come from one image sensor **102**. Herein, the plurality of events **108** are temporally dense, and carry information about true fine-grained motion in-between frames of the plurality of LDR images **104**, without suffering from motion blur and saturation. Furthermore, the plurality of LDR images **104** are not bound by assumption of constant brightness to estimate motion, in contrast to the plurality of LDR images **104** that need to be exposure compensated. Notably, the HDR imaging device **100** combines both the plurality of LDR images **104** and the plurality of events **108** to estimate robust motion information from complementary sources, thereby facilitating LDR image alignment.

In accordance with an embodiment, the image sensor **102** and the aligned event sensor **106** are aligned with beam splitter, or wherein the image sensor **102** and the aligned event sensor **106** are integrated into a hybrid sensor. Herein, the beam splitter is an optical device that splits a beam of light in two. Furthermore, the HDR imaging device **100** combines the RGB camera with the aligned event sensor **106** to perform HDR imaging that is multi-bracketed in nature. Notably, high quality bracketed plurality of LDR images **104** is recorded from the image sensor **102**. Additionally, hybrid sensors enhance the luminance of the plurality of LDR images **104** using added information from the plurality of events **108**. Furthermore, this approach aims to merge the advantages of both the image sensor **102** and the aligned event sensor **106** in one unique design. Furthermore, the stream of plurality of events **108** from the event sensor **106** is geometrically aligned with the image sensor **102**. Additionally, the image sensor **102** and the aligned event sensor **106** are temporarily synchronized and optically aligned.

In accordance with an embodiment, the HDR imaging device **100** comprises a pre-processing module configured to de-noise and/or de-blur each LDR image based on the associated subset of the plurality of events **108**. Herein, noise in each LDR image may be caused by different intrinsic and extrinsic conditions which as often not possible to avoid in practical situations. Furthermore, de-blurring of the each LDR image is a recovering process that recovers a sharp latent LDR image from a blurred LDR image, wherein the blurring may be caused due to shaking of the HDR imaging device **100** or motion of object whose image is being taken. Subsequently, each LDR image undergoes a deformable alignment via multi-scale auxiliary reconstruction losses, thereby helping the HDR imaging device **100** with better alignment at each scale.

The image encoder module **110** configured to generate an image feature representation based on each of the LDR images. Herein, the image encoder module **110** compresses each of the LDR images into a latent space representation and encodes the input LDR images as a compressed representation in a reduced dimension. Moreover, the image encoder module **110** helps to learn important hidden features present in the input data, in the process to reduce the reconstruction error. Furthermore, during encoding, a new set of combinations of original features is generated.

The event encoder module **112** is configured to generate an event feature representation based on a subset of the plurality of events **108** associated with each of the LDR images. Simultaneously, the events in between bracketed exposures of the LDR images, namely the mid-exposed LDR image **122**, the short-exposed LDR image **124**, the long-exposed LDR image **126** are split and fed into the feature alignment module **114**. Furthermore, the event encoder module **112** generates a multi-scale feature representation.

In accordance with an embodiment, the image encoder module **110** and the event encoder module **112** are pyramid encoder modules each including 1 to 5 residual blocks. Herein, pyramid encoding is the multi-scale representation of the plurality of LDR images **104**, wherein each of the LDR image is subjected to repeated down-sampling. Furthermore, the pyramid encoder module predicts global and local motion.

In accordance with an embodiment, the image encoder module **110** and the event encoder module **112** generate feature representation at a plurality of scales. Notably, due to the intrinsic hierarchical characteristics of convolutional neural networks (CNN), multi-scale hierarchical feature learning can be achieved via architecture design of CNNs. Additionally, inside a CNN, the early layers learn low-scale spatial features like texture, edges, or boundaries etc. while the deep layers learn high-scale semantic features. Herein, the plurality of scales refers to resizing of the plurality of LDR images **104**. Furthermore, in order to procure an HDR image **120**, the feature representation should include high-level semantic features as well as low-level spatial features, as the low-level spatial features provide spatial context information per pixel.

In accordance with an embodiment, the image encoder module **110** and the event encoder module **112** generate feature representations at three scales. Herein, the feature representation is carried out for consecutive time, which is required to align each LDR image and generate feature representations at three scales, namely the short-exposed LDR image **124** and the long-exposed LDR image **126** to the mid-exposed LDR image **122**. In accordance with an embodiment, the event encoder module **112** includes a convolutional long short-term memory (LSTM) module for each scale, each configured to integrate the event feature representations between the specified LDR image and each other LDR image. Herein, the convolutional LSTM module are operably coupled at the end of the pyramid encoder module to integrate the per-scale event feature representations between consecutive time frames, which is required to align the short-exposed LDR image **124** and long-exposed LDR image **126** to the mid-exposure LDR image **122**.

The image decoder module **118** is configured to generate the HDR image **120** based on the fused feature representation. Herein, the aligned feature representations of the plurality of LDR images **104** and the plurality of events **108** are passed into the fusion module **116** that selects per-pixel the aligned feature representations from all different sources. Furthermore, the image decoder module **118** converts encoded LDR image back to an uncompressed bitmap which can then be rendered on the HDR imaging device **100**.

In accordance with an embodiment, the image decoder module **118** includes 5 to 10 residual blocks.

In accordance with an embodiment, the image decoder module **118** includes a skip connection of the image feature representation of the specified LDR image from the image encoder module **110**. Herein, the skip connection ensures alignment with the specified LDR image, that is the mid-exposed LDR image, and pushes the network to only learn the missing information that needs to be filled from the other LDR images, that is short- and long-exposed LDR images.

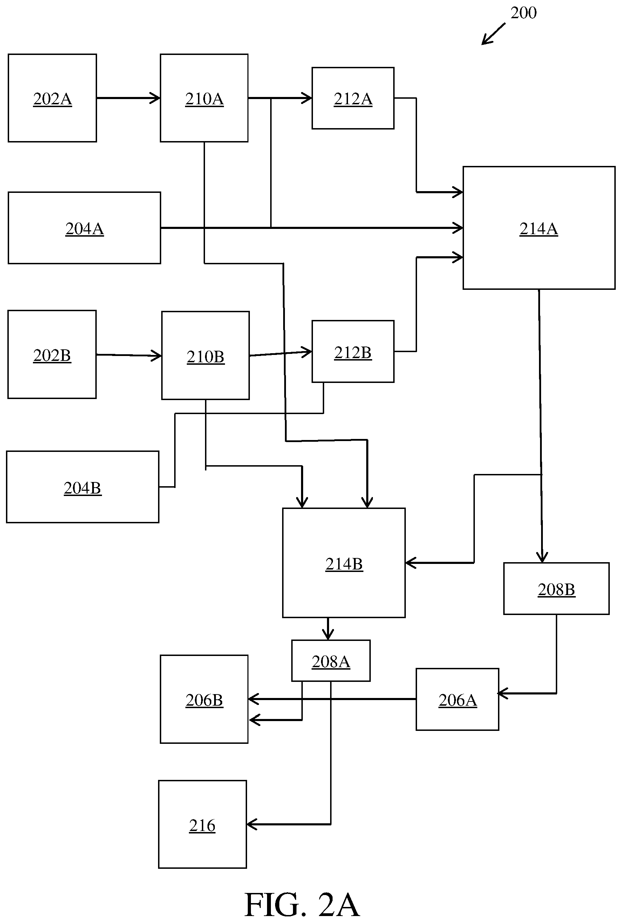

FIG. 2A is a block diagram of a feature alignment module, in accordance with an embodiment of the present disclosure. With reference to FIG.2A, there is shown a feature alignment module **200** for a pair of specified LDR images, namely a first specified LDR image **202A** and a second specified LDR image **202B** and their corresponding event feature representation, namely a first event feature representation **204A** and a second event feature representation **204B**. The feature alignment module **200** generates a plurality of aligned feature representations **206A**, **206B** by applying deformable convolutions **208A**, **208B** to the image feature representations of the first specified LDR image **202A** and the second specified LDR image **202B**. Furthermore, the HDR imaging device generates aligned feature representations **206A** and **206B** for scale, wherein the scale comprises large scale **210A** and **210B**, and small scale **212A** and **212B**. Additionally, the feature alignment module **200** is configured to estimate offsets using a lookup network, namely a low look up network **214A** and a high look up network **214B**. Moreover, the feature alignment module **200** is supervised by generating auxiliary reconstructions **216**.

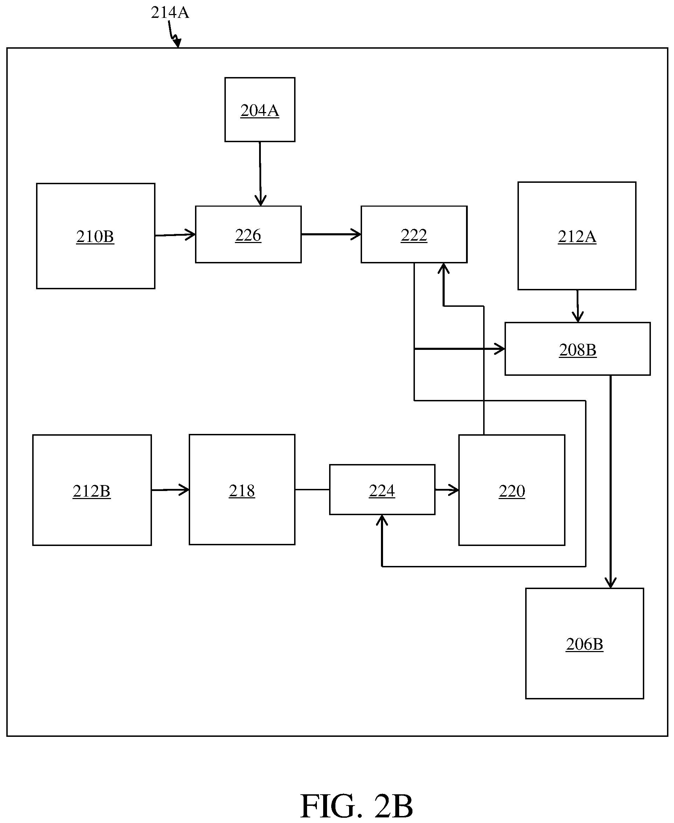

FIG. 2B is a block diagram of architecture of the low lookup network, in accordance with an embodiment of the present disclosure. FIG. 2B is in conjunction with FIG. 2A. With reference to FIG. 2B, there is shown an overview of the low lookup network **214A**. The low lookup network **214A** uses the feature alignment module **200** to estimate offsets and generate aligned feature representations **206A** for the small scale **212A**. The low lookup network **214A** extracts per-pixel features **218**, builds a multi-scale 4D correlation volume **220** for all pairs of pixels, and iteratively update a flow field through a recurrent unit **222** that performs lookups **224** on the multi-scale 4D correlation volume **220**. Furthermore, the deformable convolutions **208A**, **208B** of image feature representation of the first specified LDR image **202A** and the first event feature representation **204A** are concatenated into a context net **226**.

The feature alignment module **200** is configured to estimate per-pixel offsets between the image feature representation of a specified LDR image, namely the first specified LDR image **202A** and the second specified LDR image **202B** and the image feature representations of each other LDR image, based on the image and event feature representations, namely the first event feature representation **204A** and the second event feature representation **204B** of each LDR image. Herein, the per-pixel offset is a technique for measuring displacement between the image feature representation of the specified LDR image. Additionally, the feature alignment module **200** is iterative and deformable in nature.

The feature alignment module **200** is configured to generate a plurality of aligned feature representations **206A**, **206B** by applying deformable convolutions **208A**, **208B** or feature warping to the image feature representations of each other LDR image based on the estimated offsets. Herein, deformable convolution **208A, 208B** refers to adding two-dimensional (2D) offsets to a regular grid sampling locations in standard convolution. Additionally, this enables free form deformation of the sampling grid. Moreover, the offsets are learned from the preceding feature maps, via additional convolutional layers. Herein, the offsets are used to apply deformable convolutions **208A**, **208B** to features of the second specified LDR image **202B** at the small scale **212B** and align them to features of the first specified LDR image **202A**. Subsequently, same procedure is repeated for the large scale **210A**, **210B** with starting point being results coming from the small scale **212B**.

In accordance with an embodiment, the feature alignment module **200** first estimates offsets and generates aligned feature representations **206A**, **206B** for the smallest scale, and is configured to estimate the offsets for each subsequent scales, namely the large scale **210A**, **210B** and the small scale **212A**, **212B,** based at least in part on the offsets for the preceding scale. Herein the LDR images are the first specified LDR image **202A** and the second specified LDR image **202B** and their corresponding event feature representation, namely the first event feature representation **204A** and the second event feature representation **204B** may be processed at two scales i.e., large scale **210A** and **210B**, and small scale **212A** and **212B**. Subsequently, the image feature representations of the first specified LDR image **202A** and the second specified LDR image **202B** are concatenated with the first event feature representation **204A** and the second event feature representation **204B** at small scale **212A** and **212B** which are passed to the low lookup network **214A**. Furthermore, the offsets of the deformable convolutions **208A**, **208B** at each scale, are computed jointly from feature representations of the first specified LDR image **202A** and the second specified LDR image **202B** and their corresponding event feature representation, namely the first event feature representation **204A** and the second event feature representation **204B**. Alternatively, the offsets may be estimated separately, once from the image feature representation of the first specified LDR image **202A** and the second specified LDR image **202B** alone, and another from the first event feature representation **204A** and the second event feature representation **204B** resulting in a pair of aligned features representations **206A**, **206B**.

In accordance with an embodiment, the feature alignment module **200** is configured to estimate the offsets using a lookup network configured to extract a plurality of per-pixel features **218**, build multi-scale 4-dimensional (4D) correlation volumes **220** for all pairs of pixels, and iteratively perform a lookup on the correlation volumes to update a flow field with values for the offsets. Herein, the iteration is performed using a recurrent unit **222** to update the flow field. Additionally, the lookup network comprises a low lookup network **214A** and a high lookup network **314B** built upon Raft Consensus Algorithm or Raft protocol, wherein Raft protocol solves a problem of getting multiple servers to agree on a shared state even while facing failures. Furthermore, the concatenation of the first specified LDR image **202A** and the second specified LDR image **202B** and their corresponding event feature representation, namely the first event feature representation **204A** and the second event feature representation **204B** at the small scale **212A** are passed to the low lookup network **214A** that estimates the offsets of a 3-by-3 kernel of deformable convolutions **208A** and **208B** at that scale. Herein, the multi-scale 4D correlation volumes **220** is a technique for full 4D strain and deformation measurements. Moreover, the multi-scale 4D correlation volumes **220** imports volume LDR images of component in reference and deformable states and is able to calculate full 4D displacement and strain map.

In accordance with an embodiment, the feature alignment module **200** is configured to apply the feature-level deformation or warping in a coarse to fine manner. Herein, warping is the process of taking information from a target location in a target image and moving it to a reference location in the reference image. It aims to counteract motion and temporally align images at a certain time frame. Furthermore, the HDR imaging approaches performing warping at image level to align the LDR images before merging them into the HDR. Furthermore, the HDR imaging device uses a pyramid encoder module comprising deformable convolution **208A**, **208B** which predicts global and local motion in a coarse to fine manner. Notably, a coarse-to-fine approach performs inference at successively finer level. Additionally, it uses the results from the coarser stages, where inference is faster, to guide and speed up inference at the more refined levels.

In accordance with an embodiment, the feature alignment module **200** is supervised by generating auxiliary reconstructions at a plurality of scales and comparing the auxiliary reconstruction for each scale with a ground truth HDR image. Herein, the ground truth HDR image is the desired outcome of the algorithm. Furthermore, the feature alignment module **200** generates auxiliary reconstructions at the plurality of scales, as there is no requirement of additional annotations other than the ground truth HDR image, but down-sampled at different resolutions.

The fusion module is configured to generate a fused feature representation where each pixel is selected from one or more of the plurality of aligned feature representations **208A**, **208B**. Herein, the aligned feature representations **208A**, **208B** are passed into the fusion module in case of estimating offsets jointly from the plurality of LDR images and the plurality of events, or in case of estimating the plurality of LDR images and the plurality of events separately. Typically, the fusion module may be a simple 3-by-3 convolutional block, or as complicated as specialized attention modules, for instance spatial attention, spatio-temporal attention and so forth. Optionally, the fusion module may include unaligned feature representations from the bracketed LDR images, wherein the bracketed LDR images are without linearization and exposure compensation. Particularly, an integrated event feature representation, after processing them in reverse order with an extra dedicated convolutional LSTM module that aligns the event feature representations at consecutive times.

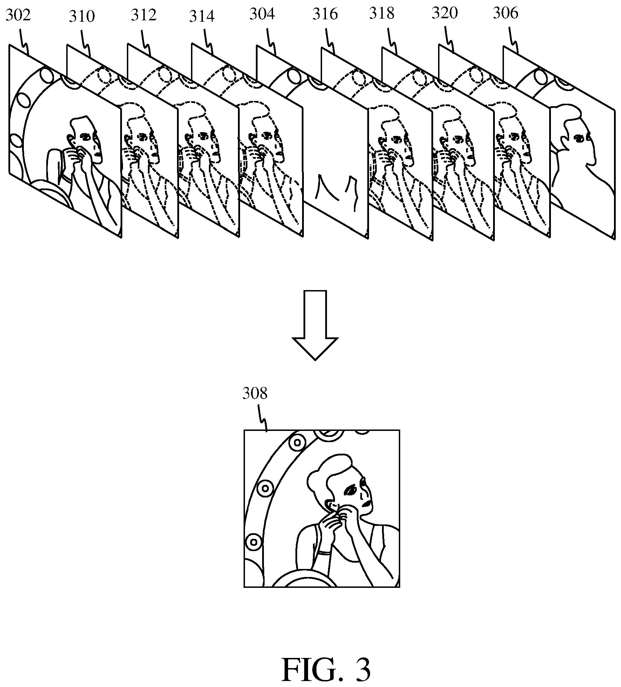

FIG. 3 is an operation of generating HDR image, in accordance with an exemplary embodiment of the present disclosure. With reference to FIG. 3, there is shown multiple LDR images taken under different exposures, such as mid-exposed image **302**, short-exposed image **304** and long-exposed image **306**, fused into the HDR image **308**. The fusion also includes events in-between exposures such as, **310**, **312**, **314**, **316**, **318** and **320** triggered by an aligned event camera. The multiple LDR images, such as **302**, **304** and **306** are taken by the image sensor and is in synchronization with the aligned event sensor.

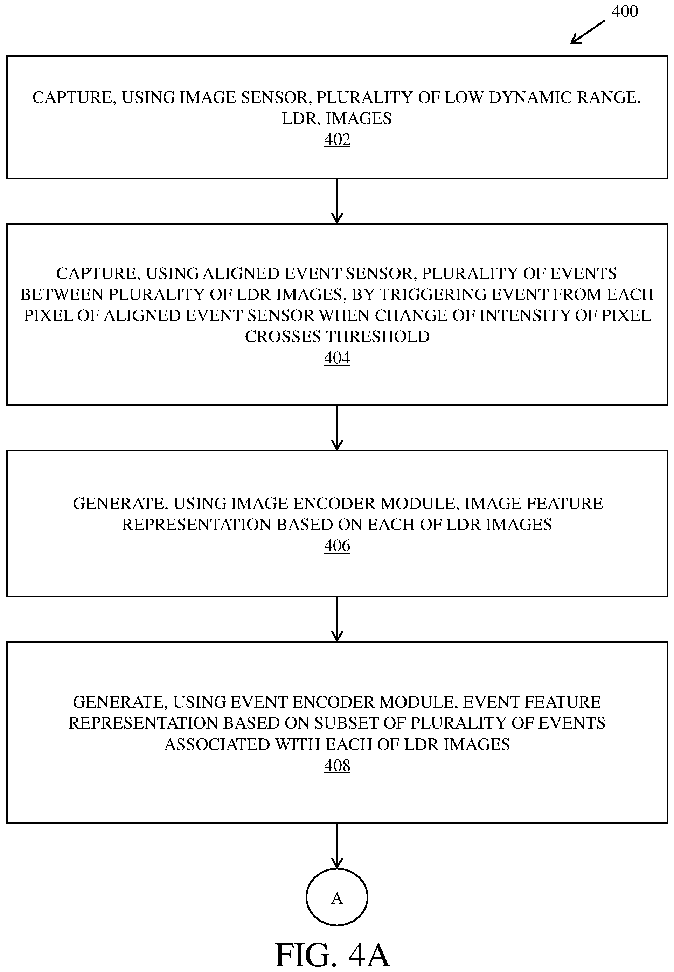

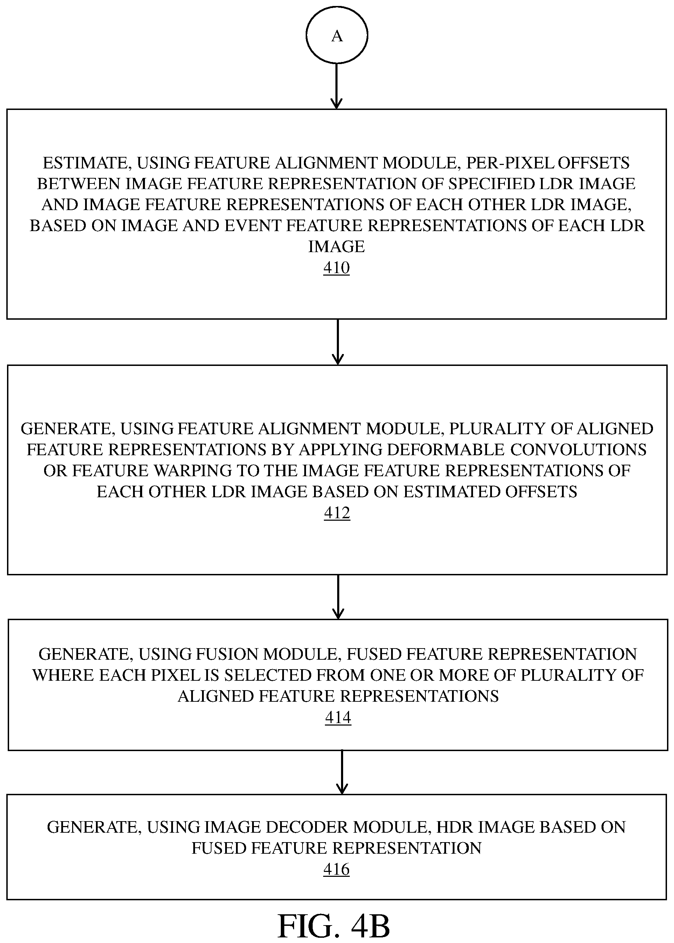

FIGs. 4A & 4B are flowchart depicting steps of a method of generating a HDR image, in accordance with an embodiment of the present disclosure. With reference to FIG. 4, there is shown a method **400** of generating the HDR image. The method **400** includes steps **402**-to-**416.**

The method **400** introduces an efficient way of generating the HDR image. The method **400** is described in detail in following steps. At step **402**, the method **400** comprises capturing, using an image sensor, a plurality of low dynamic range, LDR, images. At step **404**, the method **400** comprises capturing, using an aligned event sensor, a plurality of events between the plurality of LDR images, by triggering an event from each pixel of the aligned event sensor when a change of intensity of the pixel crosses a threshold. At step **406**, the method **400** comprises generating, using an image encoder module, an image feature representation based on each of the LDR images. At step **408**, the method **400** comprises generating, using an event encoder module, an event feature representation based on a subset of the plurality of events associated with each of the LDR images. At step **410**, the method **400** comprises estimating, using a feature alignment module, per-pixel offsets between the image feature representation of a specified LDR image and the image and event feature representations of each other LDR image, based on the image and event feature representations of each LDR image. At step **412**, the method **400** comprises generating, using the feature alignment module, a plurality of aligned feature representations by applying deformable convolutions or feature warping a feature-level deformation to the image and event feature representations of each other LDR image based on the estimated offsets. At step **414**, the method **400** comprises generating, using a fusion module, a fused feature representation where each pixel is selected from one or more of the plurality of aligned feature representations. At step **416**, the method **400** comprises generate, using an image decoder module, a HDR image based on the fused feature representation.

In accordance with an embodiment, the method comprises the image sensor that is configured to generate a burst of three LDR images including a mid-exposed LDR image followed by a short-exposed LDR image followed by a long-exposed LDR image, wherein the specified LDR image is the mid exposed LDR image.

In accordance with an embodiment, the image sensor and aligned event sensor aligned with beam splitter, or wherein the image sensor and aligned event sensor are integrated in a hybrid sensor.

In accordance with an embodiment, a pre-processing module configured to de-noise and/or de-blur each LDR image based on the associated subset of the plurality of events.

In accordance with an embodiment, the image encoder module and event encoder module generate feature representations at a plurality of scales.

In accordance with an embodiment, the image encoder module and event encoder module generate feature representations at three scales.

In accordance with an embodiment, the event encoder module includes a convolutional LSTM module for each scale, each configured to integrate the event feature representations between the specified LDR image and each other LDR image.

In accordance with an embodiment, the feature alignment module first estimates offsets and generates aligned feature representations for the smallest scale, and is configured to estimate the offsets for each subsequent scale based at least in part on the offsets for the preceding scale.

In accordance with an embodiment, the feature alignment module is configured to estimate the offsets using a lookup network configured to extract a plurality of per-pixel features, build multi-scale 4D correlation volumes for all pairs of pixels, and iteratively per-form a lookup on the correlation volumes to update a flow field with values for the offsets.

In accordance with an embodiment, the image encoder module and event encoder module are pyramid encoder modules each including 1 to 5 residual blocks.

In accordance with an embodiment, the feature alignment module is configured to apply the feature-level deformation or warping in a coarse to fine manner.

In accordance with an embodiment, the feature alignment module is supervised by generating auxiliary reconstructions at a plurality of scales and comparing the auxiliary reconstruction for each scale with a ground truth HDR image.

In accordance with an embodiment, the image decoder module includes 5 to 10 residual blocks.

In accordance with an embodiment, the image decoder module includes a skip connection of the image feature representation of the specified LDR image from the image encoder module.

The computer-readable medium comprising instructions which, when executed by a processor, cause the processor to perform the method of the present disclosure. Herein, the term *"computer-readable medium"* is a medium capable of storing data in a format readable and executable by the processor. Furthermore, the computer-readable medium may include magnetic media such as magnetic disks, cards, tapes, and drums, punched cards and paper tapes, optical discs, barcodes and magnetic ink characters. Additionally, common computer-readable medium technologies include magnetic recording, processing waveforms, and barcodes. Moreover, the term *"processor"* relates to a computational element that is operable to respond to and processes instructions that drive the computer-readable medium. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the present disclosure, which are, for brevity, described in the context of a single embodiment, may also be provided separately or in any suitable combination or as suitable in any other described embodiment of the disclosure.

## Claims

1. A high dynamic range, HDR, imaging device (100) comprising:
an image sensor (102) configured to capture a plurality of low dynamic range, LDR, images (104);
an aligned event sensor (106) with pixels configured to capture a plurality of events (108) between the plurality of LDR images (104), wherein each pixel is configured to trigger an event when a change of intensity of the pixel crosses a threshold;
an image encoder module (110) configured to generate an image feature representation based on each of the LDR images;
an event encoder module (112) configured to generate an event feature representation based on a subset of the plurality of events (108) associated with each of the LDR images;
a feature alignment module (114, 200) configured to:
estimate per-pixel offsets between the image feature representation of a specified LDR image and the image feature representations of each other LDR image, based on the image and event feature representations of each LDR image, and
generate a plurality of aligned feature representations (206A, 206B) by applying deformable convolutions (208A, 208B) or feature warping to the image feature representations of each other LDR image based on the estimated offsets;
a fusion module (116) configured to generate a fused feature representation where each pixel is selected from one or more of the plurality of aligned feature representations (206A, 206B); and
an image decoder module (118) configured to generate a HDR image (120) based on the fused feature representation.

2. The HDR imaging device (100) of claim 1, wherein the image sensor (102) is configured to generate a burst of three LDR images including a mid-exposed LDR image (122, 302) followed by a short-exposed LDR image (124, 304) followed by a long-exposed LDR image (126, 306), wherein the specified LDR image is the mid-exposed LDR image.

3. The HDR imaging device (100) of claim 1 or claim 2, wherein the image sensor (102) and the aligned event sensor (106) are aligned with beam splitter, or
wherein the image sensor and the aligned event sensor are integrated in a hybrid sensor.

4. The HDR imaging device (100) of any preceding claim, further comprising a pre-processing module configured to de-noise and/or de-blur each LDR image based on the associated subset of the plurality of events (108).

5. The HDR imaging device (100) of any preceding claim, wherein the image encoder module (110) and the event encoder module (112) generate feature representations at a plurality of scales (210A, 210B, 212A, 212B).

6. The HDR imaging device (100) of claim 5, wherein the image encoder module (110) and the event encoder module (112) generate the feature representations at three scales.

7. The HDR imaging device (100) of claim 5 or claim 6, wherein the event encoder module (112) includes a convolutional LSTM module for each scale, each configured to integrate the event feature representations between the specified LDR image and each other LDR image.

8. The HDR imaging device (100) of any one of claims 5 to 7, wherein the feature alignment module (114, 200) first estimates offsets and generates aligned feature representations (206A, 206B) for the smallest scale, and is configured to estimate the offsets for each subsequent scale based at least in part on the offsets for the preceding scale.

9. The HDR imaging device (100) of any preceding claim, wherein the feature alignment module (114, 200) is configured to estimate the offsets using a lookup network configured to extract a plurality of per-pixel features (218), build multi-scale 4D correlation volumes (220) for all pairs of pixels, and iteratively perform a lookup on the correlation volumes to update a flow field with values for the offsets.

10. The HDR imaging device (100) of any preceding claim, wherein the image encoder module (110) and the event encoder module (112) are pyramid encoder modules each including 1 to 5 residual blocks.

11. The HDR imaging device (100) of any preceding claim, wherein the feature alignment module (114, 200) is configured to apply the feature-level deformation or warping in a coarse to fine manner.

12. The HDR imaging device (100) of any preceding claim, wherein the feature alignment module (114, 200) is supervised by generating auxiliary reconstructions (216) at the plurality of scales (210A, 210B, 212A, 212B) and comparing the auxiliary reconstruction for each scale with a ground truth HDR image.

13. The HDR imaging device (100) of any preceding claim, wherein the image decoder module (118) includes 5 to 10 residual blocks.

14. The HDR imaging device (100) of any preceding claim, wherein the image decoder module (118) includes a skip connection of the image feature representation of the specified LDR image from the image encoder module (110).

15. A method (400) of generating a high dynamic range, HDR, image, comprising:
capturing, using an image sensor (102), a plurality of low dynamic range, LDR, images;
capturing, using an aligned event sensor (106), a plurality of events (108) between the plurality of LDR images (104), by triggering an event from each pixel of the aligned event sensor when a change of intensity of the pixel crosses a threshold;
generating, using an image encoder module (110), an image feature representation based on each of the LDR images;
generating, using an event encoder module (112), an event feature representation based on a subset of the plurality of events (108) associated with each of the LDR images;
estimating, using a feature alignment module (114, 200), per-pixel offsets between the image feature representation of a specified LDR image and the image feature representations of each other LDR image, based on the image and event feature representations of each LDR image;
generating, using the feature alignment module (114, 200), a plurality of aligned feature representations (206A, 206B) by applying deformable convolutions (208A, 208B) or feature warping to the image feature representations of each other LDR image based on the estimated offsets;
generating, using a fusion module (116), a fused feature representation where each pixel is selected from one or more of the plurality of aligned feature representations (206A, 206B); and
generate, using an image decoder module (118), a HDR image (120) based on the fused feature representation.

## Patentansprüche

1. Bildgebungsvorrichtung mit hohem Dynamikumfang, HDR-Bildgebungsvorrichtung (100), umfassend:
einen Bildsensor (102), der dazu konfiguriert ist, eine Vielzahl von Bildern mit niedrigem Dynamikumfang, LDR-Bildern (104), zu erfassen;
einen ausgerichteten Ereignissensor (106) mit Pixeln, die dazu konfiguriert sind, eine Vielzahl von Ereignissen (108) unter der Vielzahl von LDR-Bildern (104) zu erfassen, wobei jedes Pixel dazu konfiguriert ist, ein Ereignis auszulösen, wenn eine Intensitätsänderung des Pixels einen Schwellenwert überschreitet;
ein Bildcodierermodul (110), das dazu konfiguriert ist, basierend auf jedem der LDR-Bilder eine Bildmerkmalsdarstellung zu erzeugen;
ein Ereigniscodierermodul (112), das dazu konfiguriert ist, eine Ereignismerkmalsdarstellung basierend auf einer Teilmenge der Vielzahl von Ereignissen (108), die mit jedem der LDR-Bilder verknüpft sind, zu erzeugen;
ein Merkmalsausrichtungsmodul (114, 200), das zu Folgendem konfiguriert ist:
Schätzen pixelgenauer Offsets zwischen der Bildmerkmalsdarstellung eines spezifizierten LDR-Bildes und den Bildmerkmalsdarstellungen jedes anderen LDR-Bildes, basierend auf den Bild- und Ereignismerkmalsdarstellungen jedes LDR-Bildes, und
Erzeugen einer Vielzahl von ausgerichteten Merkmalsdarstellungen (206A, 206B) durch Anwenden von verformbaren Faltungen (208A, 208B) oder von Merkmalsverzerrung auf die Bildmerkmalsdarstellungen jedes anderen LDR-Bildes basierend auf den geschätzten Offsets;
ein Fusionsmodul (116), das dazu konfiguriert ist, eine fusionierte Merkmalsdarstellung zu erzeugen, wobei jedes Pixel aus einer oder mehreren der Vielzahl von ausgerichteten Merkmalsdarstellungen (206A, 206B) ausgewählt wird; und
ein Bilddecodierermodul (118), das dazu konfiguriert ist, basierend auf der fusionierten Merkmalsdarstellung ein HDR-Bild (120) zu erzeugen.

2. HDR-Bildgebungsvorrichtung (100) nach Anspruch 1, wobei der Bildsensor (102) dazu konfiguriert ist, eine Serie von drei LDR-Bildern zu erzeugen, die ein mittelbelichtetes LDR-Bild (122, 302), gefolgt von einem kurzbelichteten LDR-Bild (124, 304), gefolgt von einem langbelichteten LDR-Bild (126, 306) beinhaltet, wobei das spezifizierte LDR-Bild das mittelbelichtete LDR-Bild ist.

3. HDR-Bildgebungsvorrichtung (100) nach Anspruch 1 oder Anspruch 2, wobei der Bildsensor (102) und der ausgerichtete Ereignissensor (106) mit einem Strahlteiler ausgerichtet werden oder
wobei der Bildsensor und der ausgerichtete Ereignissensor in einem Hybridsensor integriert sind.

4. HDR-Bildgebungsvorrichtung (100) nach einem der vorhergehenden Ansprüche, ferner umfassend ein Vorverarbeitungsmodul, das dazu konfiguriert ist, bei jedem LDR-Bild basierend auf der verknüpften Teilmenge der Vielzahl von Ereignissen (108) Rauschen und/oder Unschärfe zu entfernen.

5. HDR-Bildgebungsvorrichtung (100) nach einem der vorhergehenden Ansprüche, wobei das Bildcodierermodul (110) und das Ereigniscodierermodul (112) Merkmalsdarstellungen in einer Vielzahl von Maßstäben (210A, 210B, 212A, 212B) erzeugen.

6. HDR-Bildgebungsvorrichtung (100) nach Anspruch 5, wobei das Bildcodierermodul (110) und das Ereigniscodierermodul (112) die Merkmalsdarstellungen in drei Maßstäben erzeugen.

7. HDR-Bildgebungsvorrichtung (100) nach Anspruch 5 oder Anspruch 6, wobei das Ereigniscodierermodul (112) ein Faltungs-LSTM-Modul für jeden Maßstab beinhaltet, wobei jedes dazu konfiguriert ist, die Ereignismerkmalsdarstellungen zwischen dem spezifizierten LDR-Bild und jedem anderen LDR-Bild zu integrieren.

8. HDR-Bildgebungsvorrichtung (100) nach einem der Ansprüche 5 bis 7, wobei das Merkmalsausrichtungsmodul (114, 200) zuerst Offsets schätzt und ausgerichtete Merkmalsdarstellungen (206A, 206B) für den kleinsten Maßstab erzeugt und dazu konfiguriert ist, die Offsets für jeden nachfolgenden Maßstab zumindest teilweise basierend auf den Offsets für den vorhergehenden Maßstab zu schätzen.

9. HDR-Bildgebungsvorrichtung (100) nach einem der vorhergehenden Ansprüche, wobei das Merkmalsausrichtungsmodul (114, 200) dazu konfiguriert ist, die Offsets unter Verwendung eines Nachschlagenetzwerks zu schätzen, das dazu konfiguriert ist, eine Vielzahl von pixelgenauen Merkmalen (218) zu extrahieren, mehrskalige 4D-Korrelationsvolumina (220) für alle Pixelpaare zu erstellen und iterativ ein Nachschlagen für die Korrelationsvolumina durchzuführen, um ein Strömungsfeld mit Werten für die Offsets zu aktualisieren.

10. HDR-Bildgebungsvorrichtung (100) nach einem der vorhergehenden Ansprüche, wobei das Bildcodierermodul (110) und das Ereigniscodierermodul (112) Pyramidencodierermodule sind, die jeweils 1 bis 5 Residual-Blöcke beinhalten.

11. HDR-Bildgebungsvorrichtung (100) nach einem der vorhergehenden Ansprüche, wobei das Merkmalsausrichtungsmodul (114, 200) dazu konfiguriert ist, die Verformung oder Verzerrung auf Merkmalsebene von grob bis fein anzuwenden.

12. HDR-Bildgebungsvorrichtung (100) nach einem der vorhergehenden Ansprüche, wobei das Merkmalsausrichtungsmodul (114, 200) überwacht wird, indem Hilfsrekonstruktionen (216) bei der Vielzahl von Maßstäben (210A, 210B, 212A, 212B) erzeugt werden und die Hilfsrekonstruktion für jeden Maßstab mit einem HDR-Ground-Truth-Bild verglichen wird.

13. HDR-Bildgebungsvorrichtung (100) nach einem der vorhergehenden Ansprüche, wobei das Bilddecodierermodul (118) 5 bis 10 Residual-Blöcke beinhaltet.

14. HDR-Bildgebungsvorrichtung (100) nach einem der vorhergehenden Ansprüche, wobei das Bilddecodierermodul (118) eine Skip-Verbindung der Bildmerkmalsdarstellung des spezifizierten LDR-Bildes von dem Bildcodierermodul (110) beinhaltet.

15. Verfahren (400) zum Erzeugen eines Bildes mit hohem Dynamikumfang, HDR-Bildes, umfassend:
Erfassen, unter Verwendung eines Bildsensors (102), einer Vielzahl von Bildern mit geringem Dynamikumfang, LDR-Bildern;
Erfassen, unter Verwendung eines ausgerichteten Ereignissensors (106), einer Vielzahl von Ereignissen (108) unter der Vielzahl von LDR-Bildern (104) durch Auslösen eines Ereignisses von jedem Pixel des ausgerichteten Ereignissensors, wenn eine Intensitätsänderung des Pixels einen Schwellenwert überschreitet;
Erzeugen, unter Verwendung eines Bildcodierermoduls (110), einer Bildmerkmalsdarstellung basierend auf jedem der LDR-Bilder;
Erzeugen, unter Verwendung eines Ereigniscodierermoduls (112), einer Ereignismerkmalsdarstellung basierend auf einer Teilmenge der Vielzahl von Ereignissen (108), die mit jedem der LDR-Bilder verknüpft sind;
Schätzen, unter Verwendung eines Merkmalsausrichtungsmoduls (114, 200), pixelgenauer Offsets zwischen der Bildmerkmalsdarstellung eines spezifizierten LDR-Bildes und den Bildmerkmalsdarstellungen jedes anderen LDR-Bildes, basierend auf den Bild- und Ereignismerkmalsdarstellungen jedes LDR-Bildes;
Erzeugen, unter Verwendung eines Merkmalsausrichtungsmoduls (114, 200), einer Vielzahl von ausgerichteten Merkmalsdarstellungen (206A, 206B) durch Anwenden von verformbaren Faltungen (208A, 208B) oder von Merkmalsverzerrung auf die Bildmerkmalsdarstellungen jedes anderen LDR-Bildes basierend auf den geschätzten Offsets;
Erzeugen, unter Verwendung eines Fusionsmoduls (116), einer fusionierten Merkmalsdarstellung, wobei jedes Pixel aus einer oder mehreren der Vielzahl von ausgerichteten Merkmalsdarstellungen (206A, 206B) ausgewählt wird; und
Erzeugen, unter Verwendung eines Bilddecodierermoduls (118), eines HDR-Bildes (120), basierend auf der fusionierten Merkmalsdarstellung.

## Revendications

1. Dispositif d'imagerie à plage dynamique élevée, HDR (100) comprenant :
un capteur d'images (102) configuré pour capturer une pluralité d'images à faible plage dynamique, LDR (104) ;
un capteur d'événements aligné (106) avec des pixels configurés pour capturer une pluralité d'événements (108) entre la pluralité d'images LDR (104), dans lequel chaque pixel est configuré pour déclencher un événement lorsqu'un changement d'intensité du pixel dépasse un seuil ;
un module de codeur d'image (110) configuré pour générer une représentation de caractéristique d'image sur la base de chacune des images LDR ;
un module de codeur d'événement (112) configuré pour générer une représentation de caractéristique d'événement sur la base d'un sous-ensemble de la pluralité d'événements (108) associés à chacune des images LDR ;
un module d'alignement de caractéristiques (114, 200) configuré pour :
estimer des décalages par pixel entre la représentation de caractéristique d'image d'une image LDR spécifiée et les représentations de caractéristiques d'image de chaque autre image LDR, sur la base des représentations de caractéristiques d'image et d'événement de chaque image LDR, et
générer une pluralité de représentations de caractéristiques alignées (206A, 206B) en appliquant des convolutions déformables (208A, 208B) ou un gauchissement de caractéristiques aux représentations de caractéristiques d'image de chaque autre image LDR sur la base des décalages estimés ;
un module de fusion (116) configuré pour générer une représentation de caractéristique fusionnée où chaque pixel est choisi parmi une ou plusieurs de la pluralité de représentations de caractéristiques alignées (206A, 206B) ; et
un module décodeur d'image (118) configuré pour générer une image HDR (120) sur la base de la représentation de caractéristique fusionnée.

2. Dispositif d'imagerie HDR (100) selon la revendication 1, dans lequel le capteur d'images (102) est configuré pour générer une rafale de trois images LDR comportant une image LDR à exposition moyenne (122, 302) suivie d'une image LDR à exposition courte (124, 304) suivie d'une image LDR à exposition longue (126, 306), dans lequel l'image LDR spécifiée est l'image LDR à exposition moyenne.

3. Dispositif d'imagerie HDR (100) selon la revendication 1 ou la revendication 2, dans lequel le capteur d'images (102) et le capteur d'événements aligné (106) sont alignés avec un séparateur de faisceau, ou
dans lequel le capteur d'images et le capteur d'événements aligné sont intégrés dans un capteur hybride.

4. Dispositif d'imagerie HDR (100) selon une quelconque revendication précédente, comprenant également un module de pré-traitement configuré pour débruiter et/ou déflouter chaque image LDR sur la base du sous-ensemble associé de la pluralité d'événements (108).

5. Dispositif d'imagerie HDR (100) selon une quelconque revendication précédente, dans lequel le module de codeur d'image (110) et le module de codeur d'événement (112) génèrent des représentations de caractéristiques à une pluralité d'échelles (210A, 210B, 212A, 212B).

6. Dispositif d'imagerie HDR (100) selon la revendication 5, dans lequel le module de codeur d'image (110) et le module de codeur d'événement (112) génèrent les représentations de caractéristiques à trois échelles.

7. Dispositif d'imagerie HDR (100) selon la revendication 5 ou la revendication 6, dans lequel le module de codeur d'événement (112) comporte un module LSTM convolutionnel pour chaque échelle, chacun étant configuré pour intégrer les représentations de caractéristiques d'événement entre l'image LDR spécifiée et chaque autre image LDR.

8. Dispositif d'imagerie HDR (100) selon l'une quelconque des revendications 5 à 7, dans lequel le module d'alignement de caractéristiques (114, 200) estime d'abord des décalages et génère des représentations de caractéristiques alignées (206A, 206B) pour la plus petite échelle, et est configuré pour estimer les décalages pour chaque échelle suivante sur la base au moins en partie des décalages pour l'échelle précédente.

9. Dispositif d'imagerie HDR (100) selon une quelconque revendication précédente, dans lequel le module d'alignement de caractéristiques (114, 200) est configuré pour estimer les décalages à l'aide d'un réseau de recherche configuré pour extraire une pluralité de caractéristiques par pixel (218), construire des volumes de corrélation 4D multi-échelles (220) pour toutes les paires de pixels, et exécuter de manière itérative une recherche sur les volumes de corrélation pour mettre à jour un champ de flux avec des valeurs pour les décalages.

10. Dispositif d'imagerie HDR (100) selon une quelconque revendication précédente, dans lequel le module de codeur d'image (110) et le module de codeur d'événement (112) sont des modules de codeur pyramidal comportant chacun 1 à 5 blocs résiduels.

11. Dispositif d'imagerie HDR (100) selon une quelconque revendication précédente, dans lequel le module d'alignement de caractéristiques (114, 200) est configuré pour appliquer la déformation ou le gauchissement au niveau des caractéristiques d'une manière grossière à fine.

12. Dispositif d'imagerie HDR (100) selon une quelconque revendication précédente, dans lequel le module d'alignement de caractéristiques (114, 200) est supervisé en générant des reconstructions auxiliaires (216) à la pluralité d'échelles (210A, 210B, 212A, 212B) et en comparant la reconstruction auxiliaire pour chaque échelle avec une image HDR de vérité terrain.

13. Dispositif d'imagerie HDR (100) selon une quelconque revendication précédente, dans lequel le module décodeur d'image (118) comporte 5 à 10 blocs résiduels.

14. Dispositif d'imagerie HDR (100) selon une quelconque revendication précédente, dans lequel le module décodeur d'image (118) comporte une connexion de saut de la représentation de caractéristique d'image de l'image LDR spécifiée à partir du module de codeur d'image (110).

15. Procédé (400) de génération d'une image à plage dynamique élevée, HDR, comprenant :
la capture, à l'aide d'un capteur d'images (102), d'une pluralité d'images à faible plage dynamique, LDR ;
la capture, à l'aide d'un capteur d'événements aligné (106), d'une pluralité d'événements (108) entre la pluralité d'images LDR (104), en déclenchant un événement à partir de chaque pixel du capteur d'événements aligné lorsqu'un changement d'intensité du pixel franchit un seuil ;
la génération, à l'aide du module de codeur d'image (110), d'une représentation de caractéristique d'image sur la base de chacune des images LDR ;
la génération, à l'aide d'un module de codeur d'événement (112), d'une représentation de caractéristique d'événement sur la base d'un sous-ensemble de la pluralité d'événements (108) associés à chacune des images LDR ;
l'estimation, à l'aide d'un module d'alignement de caractéristiques (114, 200), de décalages par pixel entre la représentation de caractéristique d'image d'une image LDR spécifiée et les représentations de caractéristiques d'image de chaque autre image LDR, sur la base des représentations de caractéristiques d'image et d'événement de chaque image LDR ;
la génération, à l'aide d'un module d'alignement de caractéristiques (114, 200), d'une pluralité de représentations de caractéristiques alignées (206A, 206B) en appliquant des convolutions déformables (208A, 208B) ou un gauchissement de caractéristiques aux représentations de caractéristiques d'image de chaque autre image LDR sur la base des décalages estimés ;
la génération, à l'aide d'un module de fusion (116), d'une représentation de caractéristique fusionnée où chaque pixel est choisi parmi une ou plusieurs de la pluralité de représentations de caractéristiques alignées (206A, 206B) ; et
la génération, à l'aide d'un module décodeur **d'image** (118), d'une image HDR (120) sur la base de la représentation de caractéristique fusionnée.
